(19)

**Europäisches Patentamt**
**European Patent Office**
**Office européen des brevets**

(11) **EP 4 625 850 A1**

(12) **EUROPEAN PATENT APPLICATION**

(43) Date of publication:
**01.10.2025 Bulletin 2025/40**

(21) Application number: **25161258.6**

(22) Date of filing: **03.03.2025**

(51) International Patent Classification (IPC):
**H04B 17/24** (2015.01)   **H04B 17/20** (2015.01)
**H04B 17/309** (2015.01)   **H04W 52/14** (2009.01)
**H04W 52/24** (2009.01)   **H04W 52/32** (2009.01)
**H04W 52/36** (2009.01)

(52) Cooperative Patent Classification (CPC):
**H04W 52/146; H04B 17/24; H04B 17/252;**
**H04B 17/347; H04W 52/242; H04W 52/247;**
**H04W 52/248;** H04B 17/328; H04W 52/243;
H04W 52/245; H04W 52/367

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **04.03.2024 US 202463561027 P**
**26.02.2025 US 202519063615**

(71) Applicant: **Mavenir Systems, Inc.**
**Richardson, TX 75081 (US)**

(72) Inventor: **Leelahakriengkrai, Rangsan**
**Allen, Texas, 75013 (US)**

(74) Representative: **Studio Torta S.p.A.**
**Via Viotti, 9**
**10121 Torino (IT)**

(54) **METHOD FOR BOOSTING UPLINK POWER OF A SELECTED UE BASED ON THE PATHLOSSES WITH RESPECT TO ITS NEIGHBOUR CELLS**

(57)     A method to boost uplink transmit power of the UE in at least one of 5G NR and O-RAN wireless communication systems includes: i) selecting, by a serving next generation node B (gNB), at least one candidate user equipment (UE) in a serving cell for boosting transmit power; ii) requesting, by the serving gNB, the at least one candidate UE to measure and report received power from neighboring cells, to estimate pathlosses of the at least one candidate UE to the neighboring cells; iii) selecting, by the serving gNB, the at least one candidate UE as an eligible UE for power boosting in the case the estimated pathlosses of the at least one candidate UE to the neighboring cells is higher than a specified threshold; and iv) boosting, by the serving gNB, transmit power of the eligible UE using Transmit Power Control (TPC) command.

*FIG. 3*

EP 4 625 850 A1

**Description**

BACKGROUND OF THE DISCLOSURE

1. Field of the Disclosure

The present disclosure relates to 5G New Radio (NR) and Open Radio Access Network (O-RAN) wireless communication systems, and relates more particularly to a method to boost uplink transmit power of the UE in at least one of 5G NR and O-RAN wireless communication systems.

2. Description of the Related Art

3GPP 5G NR uses power control in the uplink (UL) direction to control the Physical Uplink Shared Channel (PUSCH) transmit power of the user equipment (UE), in accordance with 3GPP Technical Specification (TS) 38.213. This is to ensure that the received power at the base station (gNB) is at a specified value. The PUSCH transmits the power in accordance with the Power Control equation as per TS 38.213. The simplified and relevant Power Control equation for the purposes of the present disclosure can be written as follows:

$$P_{tx} = min\{P_{max}, P_o + \alpha . PL + 10 log 10(2^{\mu} . M) + f\}$$

Where,

$P_{max}$ is the maximum allowed power of the UE.

$P_o$ is the sum of $P_{O\_Nominal}$ and $P_{O\_UE}$ ($P_o$ can be viewed as the received power at that gNB (if fractional power control is disabled)).

$\alpha$ is the parameter for the fractional power control. The value is from 0.1 to 1. This allows the UE not to fully compensate for pathloss $PL.$

$PL$ is the pathloss, estimated from the RSRP and $ss\_PBCH\_BlockPower$ broadcasted by the gNB, i.e., $PL = ss\_PBCH\_BlockPower- RSRP.$

$\mu$ is the numerology parameter corresponding to the sub-carrier spacing (SCS) where SCS = 15 kHz * $2^{\mu}$.

$M$ is the number of Physical Resource Block (PRB) the Scheduler at the gNB assigned to the UE.

$f = f_o + \Sigma\delta$ is the PUSCH power control adjustment, which is an accumulation of Transmit Power Control (TPC) command $\delta$ when operating in accumulation mode. The TPC command can be sent to the UE when the gNB allocates the PUSCH.

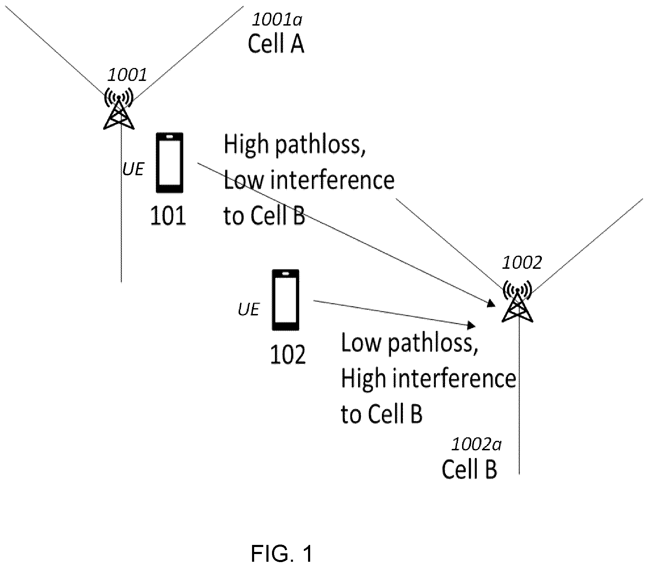

A drawback of the above-described power control equation is that it is calculated per cell, without considering the level of the interference caused to the neighboring cells. FIG. 1 illustrates an example interference scenario involving two UEs and two cells. As shown in Figure 1, the UE 101 (which is served by Cell A 1001a) is close to the gNB 1001 and its associated Cell A 1001a, so the UE 101 only causes low interference to the nearby cell, Cell B 1002a. On the other hand, the UE 102 (which is served by Cell A 1001a) is farther away from the gNB 1001 and closer (relative to the UE 101) to the neighboring Cell B 1002a, so the UE 102 causes higher interference to the nearby Cell B 1002a. Because PUSCH transmit power of the UE is controlled as per the above equation (which takes into account the pathloss to the serving gNB), the UE 101 with low pathloss to Cell A 1001a (but high pathloss to Cell B 1002a) will lower its transmit power, while the farther UE 102 with higher pathloss to Cell A 1001a (but low pathloss to Cell B 1002a) will increase its transmit power. This standard power control overlooks the fact that the UE 101 creates low interference to Cell B 1002a, so the UE 101 could increase its transmit power (to gNB 1001) to increase its throughput without causing high interference to the neighboring Cell B 1002a.
Therefore, a need exists to provide a method of boosting the UE power when such power boosting will not cause harmful interference to the neighboring cells.

SUMMARY OF THE DISCLOSURE

The present disclosure provides a method to boost uplink (UL) transmit power of the UE without causing harmful interference to the neighboring cells.

According to an example embodiment, a method to boost uplink transmit power of a UE includes: i) the gNB (base station) selecting a UE in the serving cell to boost the transmit power; and ii) the gNB requesting the selected UE to measure and report the received power from other neighboring cells, to estimate the pathloss to these neighboring cells.

According to an example embodiment, a method to boost uplink transmit power of a UE further includes: the gNB boosting the UE transmit power via UL power control without creating harmful interference to neighboring cells.

According to an example embodiment, the base station stops the UE transmit power boosting when a specified condition is met, which can include: average noise plus interference is above a specified limit; UE reports zero buffer occupancy; and UE is overheated.

BRIEF DESCRIPTION OF THE DRAWINGS

FIG. 1 illustrates an example interference scenario involving two UEs and two cells.

FIG. 2 is a flowchart of an example embodiment of a method for boosting transmit power of a UE.

FIG. 3 illustrates the advantages provided by the example method of boosting transmit power of a UE.

DETAILED DESCRIPTION

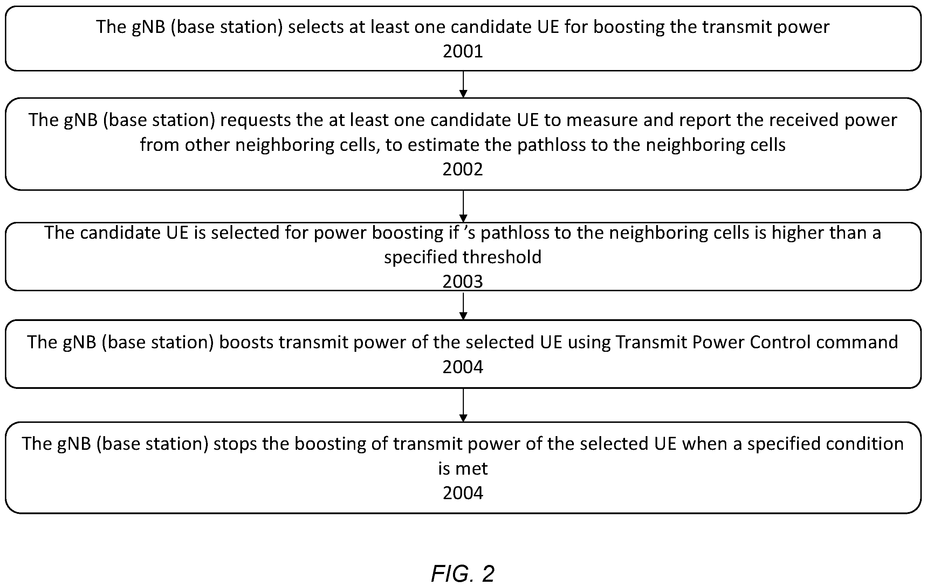

According to an example embodiment, a method to boost uplink (UL) transmit power of the UE to increase its throughput without causing harmful interference to the neighboring cells is provided, which method comprises the following steps (as illustrated in FIG. 2, which is a flowchart summarizing the example method):

i) The gNB (base station) selects at least one candidate UE for boosting the transmit power (as shown in block 2001 of FIG. 2). The selection criterion for a candidate UE can be one of the following: a) the UE is not power-limited; b) the UE has a lower pathloss to the serving gNB (base station) than a specified threshold; or c) the UE has a higher buffer size than a specified threshold.

ii) The gNB (base station) requests the at least one candidate UE to measure and report the received power from other neighboring cells, to estimate the pathloss to these neighboring cells (as shown in block 2002 of FIG. 2).

iii) The candidate UE is selected for power boosting if its pathloss to the neighboring cells is higher than a specified threshold (as shown in block 2003 of FIG. 2).

iv) The gNB (base station) boosts transmit power of the selected UE using Transmit Power Control command (as shown in block 2004 of FIG. 2), without creating harmful interference to other neighboring cells.

v) The gNB (base station) stops the boosting of transmit power of the selected UE when a specified condition is met (as shown in block 2005 of FIG. 2). The criterion for stopping the power boosting can be one of the following: a) average noise plus interference (NI) of the allocated PRB is higher than a specified limit; b) the UE reports buffers size of zero, or the gNB (base station) has drained all reported buffer size; or c) the UE reports overheated condition (e.g., due to high transmit power)

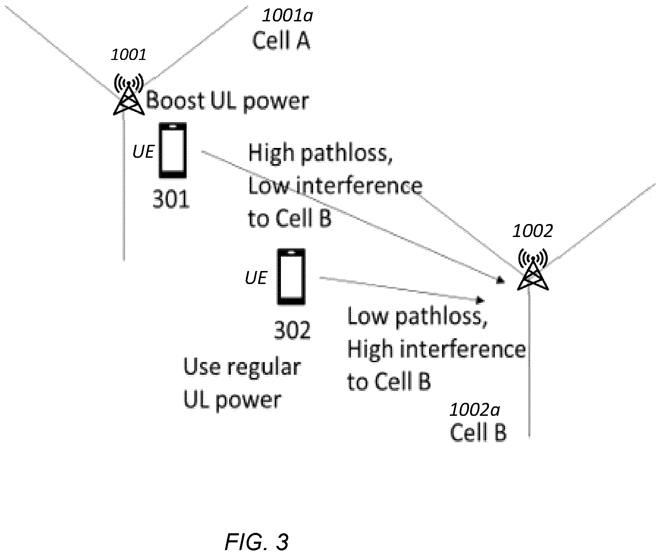

The benefit of the example embodiment of the method is illustrated in FIG. 3. In FIG. 3, the UE 301 with a low pathloss to its serving cell, Cell A 1001a (associated with gNB 1001), and a high pathloss to its neighboring cell, Cell B 1002a (associated with gNB 1002), can boost its PUSCH transmit power, hence increasing its UL throughput. In contrast, the UE 302 uses regular power for PUSCH because the UE 302 has a low pathloss to the neighboring cell, Cell B 1002a, and UE 302 would cause high interference if it were to boost its PUSCH transmit power.

In this section, a detailed explanation of the selection of the UE for power boosting will be provided. The selection criterion for a candidate UE can be one of the following: a) the UE is not power-limited; b) the UE has a lower pathloss to the serving gNB (base station) than a specified threshold; or c) the UE has a higher buffer size than a specified threshold.

UE not power-limited: From the power control equation, UE is not power-limited when it can use all PRB in the carrier and does not reach $P_{max}$. As noted above, the power control equation is:

$$P_{tx} = min\{P_{max}, P_o + \alpha.PL + 10log10(2^{\mu}.M) + f\}$$

Assuming $M_t$ is the total amount of carrier PRBs of the serving cell or bandwidth part, the UE is not power-limited when one of the following relationship is true:

$$P_{max} - (P_o + \alpha.PL + 10log10(2^\mu.M_t)) > 0$$

which can be also expressed as

$$P_o + \alpha.PL + 10log10(2^\mu.M_t) < P_{max}$$

As an example, for bandwidth 20 MHz, $\mu = 0$ (15 kHz subcarrier spacing), and $M_t = 106$. Let's assume $P_{max} = 23$ dBm, Po = -100 dBm, $\alpha = 1$, and PL = 100 dB. In this case, $P_o + \alpha.PL + 10log10(2^\mu.M_t) = 20.25$ dBm. Therefore, the UE in this case is not power-limited. Additional power ($f_{max}$) available to the UE for use is the difference between UE's max power, $P_{max}$, and the power use with total carrier PRBs, $M_t$:

$$f_{max} = P_{max} - (P_o + \alpha.PL + 10log10(2^\mu.M_t))$$

In this example, $f_{max} = 2.75$ dBm. This quantity can also be viewed as the Power Headroom (PH) when the UE uses the total amount of carrier PRBs, $Mt.$

When the UE is not power-limited and has a high buffer size, the Scheduler can allocate all carrier PRBs in the slot to the UE. Additional power can also be utilized if the average amount of PRBs allocated to the UE by the Scheduler per slot is less than $M_t$. The Scheduler can impose a restriction on the number of PRBs assigned to a UE per slot to be less than the total amount of carrier PRBs. In such cases, $M_t$ would be less, and additional power would be higher.

In an alternative example embodiment, the gNB (base station) can select a UE as a candidate for power boosting based on whether the UE exhibits a pathloss lower than a specified threshold *thPL,* which is a more direct constraint on selecting the UE as a candidate for power boosting.

In an alternative example embodiment, the gNB (base station) can select a UE as a candidate for power boosting based on whether the UE has a buffer size larger than a specified threshold *thBufferSize.* By selecting a UE with a large buffer size, higher throughput transmission can be achieved.

After the candidate UE(s) have been determined, the gNB (base station) requests each candidate UE to measure and report Reference Signal Received Power (RSRP) of other cells (i.e., cells other than the UE's serving cell). If the gNB (base station) does not receive any report from the candidate UE, then the candidate UE is considered eligible for power boosting. Alternatively, if the gNB (base station) receives the neighboring cell's RSRP measured by the candidate UE, then the gNB converts the RSRP to a pathloss (PL) to the neighboring cell. The conversion formula is as follows:

$$PLnbr = ss\_PBCH\_BlockPower\_nbr - RSRPnbr$$

where

*PLnbr* is the *PL* to the neighboring cell;
*ss_PBCH_BlockPower_nbr* is the Synchronization Signal Block (SSB) power of the neighboring cell indicated to the UE; and
*RSRPnbr* is the RSRP of the neighboring cell measured & reported by the UE.
If the candidate UE's pathloss to the neighboring cell is higher than the threshold *thMinPLNbr,* i.e.,

$$PLnbr \geq thMinPLNbr$$

then the candidate UE is considered eligible for power boosting.

When the selected UE transmits its power, the transmission's impact to the neighboring cells should be small, which means the pathloss to the neighboring cells should be high. If the gNB (base station) receives more than one neighboring cell's RSRP, then the gNB coverts the lowest value of those RSRPs to pathloss. In other wors, the pathloss utilized in the example method is the minimum value of the pathlosses to the neighboring cells, $min_c(PLnbr(c))$, where *PLnbr(c)* is the pathloss to each respective neighboring cell c. If the minimum pathloss to the neighboring cells, $min_c(PLnbr(c))$, is higher than the threshold *thMinPLNbr,* then the UE is eligible for power boosting. In other words, if

$$min_c(PLnbr(c)) \geq thMinPLNbr$$

which is equivalent to

$$PLnbr(c) \geq thMinPLNbr$$

for all cells c, i.e., the pathloss to all neighboring cells is higher than the threshold, then the UE is eligible for power boosting. High pathloss to the neighboring cells means there is very little chance that boosting the power of the UE will cause a significant interference to neighboring cells.

In this section, a detailed explanation of boosting the UE power will be provided. For the eligible UE(s), the gNB sends a positive value (+1 or +3 dB, as per 3GPP TS 38.213) of Transmit Power Control (TPC) command, $\delta$, with every PUSCH, so that the power adjustment $f = f_o + \Sigma\delta$ gradually increases the UE PUSCH transmit power, until all conditions listed below are no longer valid, at which point the gNB stops sending the TPC command (i.e., sends 0 dB value):

    i) The PUSCH transmit power is less than maximum transmit power $P_{max}$.
    ii) The SINR is less than maximum SINR, corresponding to maximum Modulation and Coding Scheme supported by both base station and the UE.
    iii) The maximum interference caused by the UE to the neighboring cells is less than the threshold *thIntfNbr*.

The SINR is less than maximum SINR: Let $P_{rx}$ be the received power, which is defined as:

$$P_{rx} = P_{tx} - PL$$

$$P_{rx} = P_o + \alpha.PL + 10log10(2^{\mu}.M_t) + f - PL$$

$$P_{rx} = P_o - (1-\alpha).PL + 10log10(2^{\mu}.M_t) + f$$

Let $P_{rx}^{PRB}$ be the received power per PRB, defined as follows:

$$P_{rx}^{PRB} = P_o - (1-\alpha).PL + 10log10(2^{\mu}.M_t) + f - 10log10(2^{\mu}.M_t)$$

$$P_{rx}^{PRB} = P_o - (1-\alpha).PL + f$$

Let $SINR_{rx}^{PRB}$ be the received SINR per PRB, and let NI be the noise plus interference:

$$SINR_{rx}^{PRB} = P_{rx}^{PRB} - NI$$

$$SINR_{rx}^{PRB} = P_o - (1-\alpha).PL + f - NI$$

From the equation above, it is evident that increasing the power adjustment through positive TPC command increases the received SINR per PRB. This is mapped to the Modulation and Coding Scheme (MCS), usually by the Outer-Loop Link Adaptation (OLLA) algorithm. However, 3GPP defines the maximum MCS to be 28 (64QAM, code rate 948/1024) in TS38.214 Table 5.1.3.1-1, and 27 (256QAM, code rate 948/1024) in Table 5.1.3.1-2. That is, the $SINR_{rx,max}^{PRB}$ can be defined as the maximum SINR to achieve those specified maximum MCS consistently. Boosting the power to further increase the SINR does not yield any higher throughput. In other words, if

$$SINR_{rx}^{PRB} < SINR_{rx,max}^{PRB}$$

then the positive power control command can be sent.

The maximum interference caused by the UE to the neighboring cells is less than *thIntfNbr*: Let $P_{rx,nbr}^{PRB}$ be the received power per PRB at the neighboring cell with lowest pathloss. This is the maximum interference per PRB to the neighboring cells.

$$P_{rx,nbr}^{PRB} = P_{tx} - 10log10(2^{\mu}.M_t) - PL_{nbr}$$

$$P_{rx,nbr}^{PRB} = P_o + \alpha.PL + 10log10(2^{\mu}.M_t) + f - 10log10(2^{\mu}.M_t) - PL_{nbr}$$

$$P_{rx,nbr}^{PRB} = P_o + \alpha.PL + f - PL_{nbr}$$

If

$$P_{rx,nbr}^{PRB} < thIntfNbr$$

then the power control command can be sent.

In addition to the above scenario in which the gNB stops sending the TPC command for the power boosting, the gNB (base station) will also stop the UE power boosting command if one of the following conditions is met:

1) Average noise plus interference (NI) of the allocated PRB is higher than *thNIhigh.* If the above condition is met, the neighboring cells might have been experiencing high traffic and creating interference to the serving cell of the UE. Therefore, the power boosting should stop or revert back to no power boosting until the NI has returned to a low level, *thNIlow,* where *thNIlow < thNIhigh.* This also acts as a fail-safe procedure in case the pathloss to the neighboring cell is incorrect or has changed.

2) UE reports buffer size of zero, or the base station has drained all reported buffer size. The TPC command is included in the DCI format that schedules the PUSCH transmission, so when there is no data to transmit, there is no reason to increase the power further.

3) UE reports overheated condition due to high transmit power. Using high transmit power could cause some UE to overheat, in which case the gNB shall stop and revert back to no power adjustment.

The techniques described herein are exemplary and should not be construed as implying any limitation on the present disclosure. Various alternatives, combinations and modifications could be devised by those skilled in the art. For example, operations associated with the processes described herein can be performed in any order, unless otherwise specified or dictated by the operations themselves. In addition, although the example embodiments have been described in the context of 5G NR and O-RAN, the present disclosure is equally applicable to 4G technology. For example, by estimating the pathloss (PL) to the neighboring cells, i.e., if CSI-RS power of the neighboring cells is known (or estimated) at the serving cells, then CSI-RS power can be used instead of *ss PBCH BlockPower nbr* to estimate the pathloss (in other words, *PLnbr = CSIRSpower - RSRP*). The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

For the sake of completeness, the following list of acronyms is provided:

**Acronyms:**

| | |
|---|---|
| 3GPP: | 3rd Generation Partnership Project |
| BS: | Base Station |
| DCI: | Downlink Control Information |
| DL: | Downlink |
| gNB | next generation node B (3GPP NR base station) |
| NR: | 3PGG New Radio |
| NI: | noise plus interference |
| PRB: | Physical Resource Block |
| PUSCH: | Physical Uplink Shared Channel |
| RSRP: | Reference signal received power |
| SINR: | Signal to Interference plus Noise Ratio |

SSB:        Synchronization Signal Block
TPC:        Transmit Power Control
UE:         User Equipment
UL:         Uplink

**Claims**

1. A method to boost uplink transmit power of the UE in at least one of 5G NR and O-RAN wireless communication systems, comprising:

   i) selecting, by a serving next generation node B (gNB), at least one candidate user equipment (UE) in a serving cell for boosting transmit power;
   ii) requesting, by the serving gNB, the at least one candidate UE to measure and report received power from neighboring cells, to estimate pathlosses of the at least one candidate UE to the neighboring cells;
   iii) selecting, by the serving gNB, the at least one candidate UE as an eligible UE for power boosting in the case the estimated pathlosses of the at least one candidate UE to the neighboring cells is higher than a specified threshold; and
   iv) boosting, by the serving gNB, transmit power of the eligible UE using Transmit Power Control (TPC) command.

2. The method according to claim 1, further comprising:
   stopping, by the serving gNB, the boosting of transmit power of the eligible UE in the case one of the following criteria is met:

   a) average noise plus interference (NI) of allocated physical resource blocks (PRBs) is higher than a specified limit;
   b) one of i) the eligible UE reports a buffer size of zero, or ii) the serving gNB has drained all reported buffer size; or
   c) the eligible UE reports an overheated condition.

3. The method according to claim 1, wherein one of:

   i) a selection criterion for selecting a candidate UE is one of the following: a) the UE is not power-limited; b) the UE has a lower pathloss to the serving gNB than a specified threshold; or c) the UE has a higher buffer size than a specified threshold; or
   ii) the the serving gNB requests the at least one candidate UE to measure and report Reference Signal Received Power (RSRP) of the neighboring cells, to estimate pathlosses of the at least one candidate UE to the neighboring cells.

4. The method according to claim 3, wherein one of:

   i) in the case the serving gNB does not receive any report of RSRP from the at least one candidate UE, selecting the candidate UE as an eligible UE for power boosting; or
   ii) in the case the serving gNB receives at least one reported RSRP of a neighboring cell from the at least one candidate UE,

      a) converting, by the serving gNB, the at least one reported RSRP to a corresponding pathloss to the neighboring cell; and
      b) in the case the corresponding pathloss to the neighboring cell is higher than a specified pathloss threshold, selecting the candidate UE as an eligible UE for power boosting.

5. The method according to claim 4, wherein:
   ii) in the case the serving gNB receives at least two reported RSRPs of neighboring cells from the at least one candidate UE,

      a) converting, by the serving gNB, the lowest value of the at least two reported RSRPs to a corresponding minimum pathloss to the neighboring cells; and
      b) in the case the corresponding minimum pathloss to the neighboring cells is higher than the specified pathloss threshold, selecting the candidate UE as an eligible UE for power boosting.

6. The method according to claim 1, wherein the serving gNB boosts the transmit power of the eligible UE using the TPC command until all of the following conditions are no longer satisfied:

    i) physical uplink shared channel (PUSCH) transmit power of the eligible UE is less than a specified maximum transmit power $P_{max}$;
    ii) signal to interference plus noise ratio (SINR) is less than a specified maximum SINR; and
    iii) maximum interference caused by the UE to the neighboring cells is less than a specified threshold *thIntfNbr.*

7. The method according to claim 6, wherein the specified maximum SINR corresponds to maximum Modulation and Coding Scheme (MCS) supported by both the serving gNB and the eligible UE.

8. The method according to claim 2, wherein a selection criterion for selecting a candidate UE is one of the following: a) the UE is not power-limited; b) the UE has a lower pathloss to the serving gNB than a specified threshold; or c) the UE has a higher buffer size than a specified threshold.

9. The method according to claim 2, wherein the the serving gNB requests the at least one candidate UE to measure and report Reference Signal Received Power (RSRP) of the neighboring cells, to estimate pathlosses of the at least one candidate UE to the neighboring cells.

10. The method according to claim 9, wherein one of:

    i) in the case the serving gNB does not receive any report of RSRP from the at least one candidate UE, selecting the candidate UE as an eligible UE for power boosting; or
    ii) in the case the serving gNB receives at least one reported RSRP of a neighboring cell from the at least one candidate UE,

        a) converting, by the serving gNB, the at least one reported RSRP to a corresponding pathloss to the neighboring cell; and
        b) in the case the corresponding pathloss to the neighboring cell is higher than a specified pathloss threshold, selecting the candidate UE as an eligible UE for power boosting.

11. The method according to claim 10, wherein:
ii) in the case the serving gNB receives at least two reported RSRPs of neighboring cells from the at least one candidate UE,

    a) converting, by the serving gNB, the lowest value of the at least two reported RSRPs to a corresponding minimum pathloss to the neighboring cells; and
    b) in the case the corresponding minimum pathloss to the neighboring cells is higher than the specified pathloss threshold, selecting the candidate UE as an eligible UE for power boosting.

12. The method according to claim 2, wherein the serving gNB boosts the transmit power of the eligible UE using the TPC command until all of the following conditions are no longer satisfied:

    i) physical uplink shared channel (PUSCH) transmit power of the eligible UE is less than a specified maximum transmit power $P_{max}$;
    ii) signal to interference plus noise ratio (SINR) is less than a specified maximum SINR; and
    iii) maximum interference caused by the UE to the neighboring cells is less than a specified threshold *thIntfNbr.*

13. The method according to claim 12, wherein the specified maximum SINR corresponds to maximum Modulation and Coding Scheme (MCS) supported by both the serving gNB and the eligible UE.

14. The method according to claim 3, wherein the serving gNB boosts the transmit power of the eligible UE using the TPC command until all of the following conditions are no longer satisfied:

    i) physical uplink shared channel (PUSCH) transmit power of the eligible UE is less than a specified maximum transmit power $P_{max}$;
    ii) signal to interference plus noise ratio (SINR) is less than a specified maximum SINR; and
    iii) maximum interference caused by the UE to the neighboring cells is less than a specified threshold *thIntfNbr.*

**15.** The method according to claim 14, wherein the specified maximum SINR corresponds to maximum Modulation and Coding Scheme (MCS) supported by both the serving gNB and the eligible UE.

FIG. 1

The gNB (base station) selects at least one candidate UE for boosting the transmit power
2001

The gNB (base station) requests the at least one candidate UE to measure and report the received power from other neighboring cells, to estimate the pathloss to the neighboring cells
2002

The candidate UE is selected for power boosting if 's pathloss to the neighboring cells is higher than a specified threshold
2003

The gNB (base station) boosts transmit power of the selected UE using Transmit Power Control command
2004

The gNB (base station) stops the boosting of transmit power of the selected UE when a specified condition is met
2004

*FIG. 2*

*FIG. 3*

Europäisches
Patentamt

European
Patent Office

Office européen
des brevets

# EUROPEAN SEARCH REPORT

**Application Number**

EP 25 16 1258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/028630 A1 (YAMAMOTO TOMONORI [JP] ET AL) 2 February 2012 (2012-02-02) <br> * abstract * <br> * paragraphs [0058] - [0087] * <br> * figures 2,3,5,6,7 * <br> ----- | 1-15 | INV. <br> H04B17/24 <br> H04B17/20 <br> H04B17/309 <br> H04W52/14 <br> H04W52/24 <br><br> ADD. <br> H04W52/32 <br> H04W52/36 |

**TECHNICAL FIELDS SEARCHED (IPC)**

H04B
H04W

The present search report has been drawn up for all claims

| Place of search | Date of completion of the search | Examiner |
|---|---|---|
| The Hague | 18 July 2025 | Yang, Betty |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 1258

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2025

| Patent document cited in search report | Publication date | Patent family member(s) | | Publication date |
|---|---|---|---|---|
| US 2012028630 A1 | 02-02-2012 | CN | 102348266 A | 08-02-2012 |
| | | EP | 2413644 A2 | 01-02-2012 |
| | | JP | 5427139 B2 | 26-02-2014 |
| | | JP | 2012034074 A | 16-02-2012 |
| | | US | 2012028630 A1 | 02-02-2012 |

EPO FORM P0459

For more details about this annex : see Official Journal of the European Patent Office, No. 12/82